# EUROPEAN PATENT APPLICATION

(11) **EP 2 056 178 A1**
(43) Date of publication of application: **06.05.2009**
(21) Application number: 07021210.5
(22) Date of filing: 30.10.2007
(51) Int. Cl.: G05B 19/418

(54) **Semiconductor circuit and sensor system**

(71) Applicant: austriamicrosystems AG, 8141 Unterpremstätten (AT)
(72) Inventor: Brandl, Manfred, 8112 Gratwein (AT); Gessner, Bernd, 8501 Lieboch (AT); Vernekar, Sandeep, Kodibag 581303 Karwar (IN)
(74) Representative: Epping - Hermann - Fischer

(57) **Abstract**

A semiconductor circuit (100, 101) comprises a sensor connector (1), a bus interface connector (2) and a sensor interface (10) which is configured to convert an input signal at the sensor connector (1) into at least one data word. The semiconductor circuit (100, 101) further comprises a buffer device (20) which is configured to store the at least one data word and a bus signal converter (30) which is configured to provide a bus signal according to a bus standard of the bus interface connector (2) as a function of the at least one stored data word.

## Description

The invention relates to a semiconductor circuit for coupling a sensor device to a bus system. The invention further relates to a sensor system.

Electric sensor devices provide signals which can be evaluated in a control system. Usually such a control system comprises a bus system which can be used for exchanging data. Signals on the bus follow a given bus standard like Local Interconnect Network, LIN, ISO K-line, Peripheral Sensor Interface 5, PSI5, Controller Area Network, CAN or other standards for serial buses. Such standards are used for example in automotive applications.

The sensor devices usually provide their data or sensor signals in a data format which is different from the used bus standard. For example the signal provided by the sensor device is an analog signal, a pulse width modulation, PWM coded signal or a digital signal. Digital signals can for example be provided over an Inter-Integrated circuit, I2C interface, a Synchronous Serial Interface, SSI, a Serial Peripheral Interface, SPI or other digital bus interfaces. Hence the sensor signals have to be converted to be transmitted over the bus system of the control system.

To this end usually a sensor device is coupled to a microcontroller which is programmed with a specific software to convert the sensor signal to an appropriate bus signal. Furthermore a voltage regulator is provided for a power supply of the microcontroller, the sensor device and a bus transceiver which is needed for an electric coupling of the microcontroller to the bus system. The individually programmable microcontroller and a separate chip comprising the voltage regulator and the bus transceiver need to be integrated separately on a circuit board, for example together with the sensor device. Hence a circuit board with a larger form factor is usually needed. Furthermore a software for the microcontroller has to be provided which in some cases needs to be qualified for specific applications like automotive applications.

It is an object of the invention to provide a semiconductor circuit for coupling an electric sensor device to a bus system with reduced effort. It is also an object of the invention to provide a sensor system with such a semiconductor circuit.

The object is achieved with the subject matter of the independent patent claims. Embodiments and developments of the invention are subject matter of the dependent claims.

In one embodiment of the invention, a semiconductor circuit comprises a sensor connector, a bus interface connector, a sensor interface, a buffer device and a bus signal converter. The sensor interface is configured to convert an input signal at the sensor connector into at least one data word. The buffer device is configured to store the at least one data word. The bus signal converter is configured to provide a bus signal according to a bus standard of the bus interface connector as a function of the at least one stored data word.

During operation of the semiconductor circuit a sensor device is coupled to the sensor connector and provides a sensor signal which can be an analog signal, a PWM coded signal or a digital signal according to one of many possible sensor interface standards like SSI, SPI or I2C. The sensor interface converts the sensor signal into an internal digital format such that digital data words are available within the semiconductor circuit. The internal digital data words are for example stored in a data register of the buffer device.

The bus signal converter takes the stored data words and generates a bus signal according to a bus standard of the bus interface connector which is coupled to a system bus of a control system for example or to a master device of the control system directly. The bus standard can be for example one of the following: LIN, ISO K-line or PSI5. In further embodiments also other bus standards can be used, preferably corresponding to serial buses.

In various embodiments the sensor interface can comprise an analog to digital converter for generating the internal digital data word as a function of an analog sensor signal at the sensor connector. In other embodiments the sensor interface can for example comprise counters for determining a pulse width of a PWM coded signal at the sensor connector, wherein the internal digital data word can be derived from the determined pulse width. For digital sensor signals the sensor interface is for example configured to generate the digital data words as a function of a serial bit stream.

The semiconductor circuit can comprise a clock generator which can be used for clocking the analog to digital converter, the pulse width counter or for a circuit for evaluating a digital sensor signal respectively. Additionally or as an alternative the semiconductor circuit can comprise a clock input or synchronization input for providing an external clock signal or synchronization signal which may be used directly or within the internal clock generator mentioned above.

In a further embodiment the semiconductor circuit comprises a voltage regulator which is coupled to a supply input and which is configured to derive an internal supply voltage for at least one of the sensor interface, the buffer device and the bus signal converter as a function of an input voltage at the supply input. In a further embodiment the voltage regulator can be further configured to derive an external supply voltage to be provided at a supply output of the semiconductor circuit as a function of the input voltage.

The voltage regulator can be a DC/DC converter which usually transforms a higher input voltage to a lower supply voltage which is needed internally and/or externally. The voltage regulator can for example comprise a buck converter wherein the supply voltage is derived from the input voltage in a clocked mode of operation. In another embodiment the voltage regulator can comprise a linear regulator, for example a low drop out regulator, LDO.

In a further embodiment the semiconductor circuit comprises a control device which is configured to coordinate the respective function of the sensor interface, the buffer device and the bus signal converter. For example a respective data processing function coordinated. Also a function of a voltage regulator can be coordinated by the control device, if such a voltage regulator is provided. The control device can comprise a microcontroller or a control state machine which are configurable with a fixed programming respectively.

For example a mask programmable ROM or a one time programmable, OTP memory can be used to parameterize a function of the control device. Furthermore a configuration register can be comprised by the semiconductor circuit which is configured to store configuration data to be used for example by the control device. Such configuration data can comprise for example a bus address of the semiconductor circuit which can be used within the bus signal when transmitting data over the bus interface connector.

In a further embodiment the semiconductor circuit can comprise a diagnosis device which is configured to perform a status detection and/or a failure detection at the sensor connector and/or the bus interface connector. Accordingly the diagnosis device can detect whether for example a sensor device at the sensor connector functions correctly and whether sensor data from the sensor device should be forwarded to the bus system coupled to the bus interface connector. In the case of a failure of the sensor device for example a status signal or failure signal can be transmitted to the bus system indicating the failure or status of the sensor device. In another embodiment also a status or failure condition of the bus system coupled to the bus interface connector can be detected by the diagnosis device, wherein this information is for example evaluated by the control device.

In various embodiments the bus signal converter comprises a protocol device and a transceiver device. The protocol device is configured to generate a first intermediate bus signal according to the bus standard as a function of the at least one stored data word and the transceiver device is configured to derive the bus signal from the first intermediate bus signal and to transmit the bus signal over the bus interface connector.

Accordingly the protocol device takes data words stored in the buffer device and generates the first intermediate bus signal which for example has a given frame structure with a specified timing according to the bus standard. A signal level or voltage level of the first intermediate bus signal may be an internal signal level which is different from a signal level needed at the bus interface connector. Therefore the transceiver device performs an adaptation of the intermediate bus signal to a signal level of the bus system. For example the transceiver device works as a level shifter between the internal signal level and the external signal level of the bus system. Furthermore the transceiver device can be used to assure or control a predefined slew rate at rising and falling clock edges of the bus signal.

In one embodiment the protocol device is configured to perform a synchronization of the first intermediate bus signal depending on a synchronization signal to be provided at a synchronization input or at the bus interface connector. The synchronization signal can be a continuous clock signal, a synchronization pulse signal or a predefined pulse sequence which are provided at the synchronization input or at the bus interface connector. The bus signal can be transmitted in form of a data telegram with a predefined frame structure. A timing of single binary values within this frame structure can be dependent on the synchronization signal.

In another embodiment the transceiver device is not only able to transmit the bus signal onto the bus system via the bus interface connector but also to receive bus signals via the bus interface connector. In this case the transceiver device can be configured to derive a second intermediate bus signal from the signal received at the bus interface connector. Furthermore the protocol device is configured to derive at least one control word from the second intermediate bus signal into buffer devices configured to store the at least one control word. For example a master device coupled to the bus system transmits a control command to the semiconductor circuit which can be evaluated by the control device. For example a function of the semiconductor circuit can be activated or de-activated temporarily by such a control command. Furthermore it is also possible that the sensor interface is configured to derive a control signal from the at least one stored control word and provide the control signal to the sensor connector.

In this case also control commands can be forwarded to the sensor device. This can be useful if the sensor device is a programmable or controllable device. In this configuration the semiconductor circuit can be regarded as a bidirectional coupling between a sensor device and a bus system or a control system respectively.

In a further embodiment the semiconductor circuit comprises a signal processing unit which is configured to process data words stored in the buffer device. In particular the signal processing unit is configured to filter the stored data words. Accordingly the signal processing unit can generate a time averaged mean of the data words by a respective low-path filtering for example. Small variations of the sensor signal provided by sensor device can be balanced out this way.

In a semiconductor circuit according to one of the embodiments described above an external programmable microcontroller is not needed. Furthermore no microcontroller is needed within the semiconductor circuit which has a programming interface for providing specific software to the microcontroller. Hence such a semiconductor circuit can be integrated on a single semiconductor chip which reduces the form factor when integrated on a circuit board. Additionally, as no external software has to be provided, such a semiconductor circuit can be produced with less effort.

Furthermore a sensor system can be provided with small effort, wherein the sensor system comprises a sensor device and a semiconductor circuit according to one of the embodiments described above. In this case the sensor device is coupled to the sensor connector of the semiconductor circuit.

The text below explains the invention in detail using exemplary embodiments with reference to the drawings, in which:
Figure 1 is a first embodiment of a semiconductor circuit,
Figure 2 is a second embodiment of a semiconductor circuit,
Figures 3A and 3B are embodiments of a sensor interface,
Figure 4 is a first embodiment of a sensor system,
Figure 5 is a second embodiment of a sensor system and
Figure 6 is an embodiment of a transceiver device.

Like reference numerals designate corresponding similar parts or elements. Elements are not necessarily to scale relative to each other.

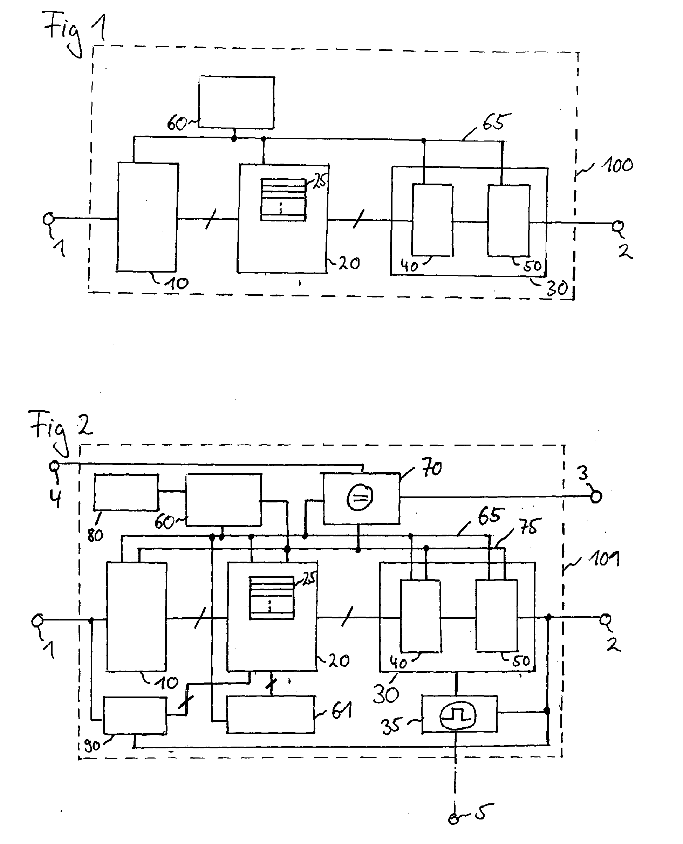

Figure 1 shows an embodiment of a semiconductor circuit 100 for coupling a bus interface connector 2 to a sensor device which is electrically connected to a sensor connector 1. The semiconductor circuit 100 comprises a sensor interface 10 which is coupled to the sensor connector 1 and to a buffer device 20. The buffer device 20 comprises a data register 25 and is coupled to a bus signal converter 30 which comprises a protocol device 40 and a transceiver device 50. The bus interface connector 2 is coupled to the bus signal converter 30 and the transceiver device 50 respectively. The semiconductor circuit 100 further comprises a control device 60 which is coupled via a control connection 65 to the sensor interface 10, the buffer device 20, the protocol device 40 and the transceiver device 50.

During operation of the semiconductor circuit 100 the sensor interface 10 receives an input signal at the sensor connector 1 and converts the input signal into an internal digital format. In other words the sensor interface 10 converts the input signal into one or more digital data words. The data words are transferred to the buffer device 20 where they are stored in the data register 25. A connection between the sensor interface and the buffer device can be a serial connection or a parallel connection with a variable or a predefined word length.

The protocol device 40 takes one or more data words from the data register 25 which can be in the form of a data stack, and converts the data word into an intermediate bus signal. The intermediate bus signal for example is in the form of a data telegram having a predefined frame structure. In this case the data words are enclosed within this frame structure. A specification of the frame structure or the data telegram respectively is given by a bus standard the bus system to which the bus interface connector is coupled for example the bus standard is given by the LIN protocol standard, the ISO K-line standard or a PSI5 standard. A clock signal which may be necessary for various timing purposes can be provided externally and/or be generated internally.

The transceiver device 50 converts the intermediate bus signal to a bus signal which can be provided at the bus interface connector 2. Generating the bus signal can for example comprise a variation of a voltage level, for example with specific predefined rise times and fall times, of a signal at the bus interface connector 2 or a current modulation of the bus signal as a function of the intermediate bus signal.

A function of the sensor interface 10, the buffer device 20, the protocol device 40 and the transceiver device 50 can be controlled or coordinated by the control device 60. The control connection 65 which is drawn as a control bus in this embodiment can comprise single control lines such that each of the elements 10, 20, 40, 50 is coupled to the control device 60 by means of a single control line or a control connection respectively.

The sensor signal or input signal at the sensor connector 1 can be an analog signal which is converted to a digital data word by the sensor interface 10. In another embodiment the sensor signal can be a PWM coded signal or a digital signal, for example according to a sensor interface standard like SSI, SPI or I2C. The sensor interface 10 may comprise respective means for deriving the digital data word from the sensor signal.

A respective function of the elements 10, 20, 40, 50 and 60 can be realized by means of a fixed programming or hard wired circuit arrangements respectively. In some embodiments the semiconductor circuit can comprise more than one possible configuration from which one can be selected preferably permanently, for example with a one time programming.

In another embodiment the transceiver device 50 is configured to receive a signal at the bus interface connector 2 and to derive a second intermediate bus signal from the signal received. The protocol device 40 analyses the second intermediate bus signal and derives one or more respective control words from the second intermediate bus signal. All protocol related features like error handling and data integrity check circuitry can be implemented in the logic elements of the protocol device 40. Furthermore the protocol device 40 can generate control signals for further processing of the data.

In accordance with the embodiments described above the control word can be comprised by a data telegram and/or a frame structure. The derived control word is stored in the buffer device 20. For example the stored control words are evaluated by the control device 60 for controlling the function of the semiconductor circuit and sending control commands over the control connection 65. In another embodiment the control words stored in the buffer device can be converted to respective control signals by the sensor interface 10, wherein the control signals are provided to the sensor connector 1 and a sensor device coupled to the sensor connector 1. In other words a bi-directional communication between the semiconductor circuit 100 and the sensor device is made possible in this embodiment. Preferably the control signal is sent to the sensor device as a digital signal. A transparent control of the sensor device is made possible by the semiconductor circuit from a control system connected to the bus interface connector 2, independently of a signal format used at the sensor connector 1.

In one exemplary embodiment the protocol device 40 is configured to be operated with the LIN protocol. In this embodiment the protocol device 40 generates a frame structure comprising a break field, a synchronization field, an identifier field, one or more data fields and a concluding checksum field. Each of the fields except the break field usually has a field length of 8 bit. Data to be transmitted and stored in the buffer device 20 are coded in respective data fields by the protocol device 40. The frame structure generated by the protocol device 40 this way can be transmitted over the bus interface connector 2 via the transceiver device 50.

In respective embodiments the protocol device 40 is also configured to decode a LIN protocol frame structure received by the bus interface connector 2 via the transceiver device 50. For example the data fields of the received frame are evaluated and respective control words comprised by the data fields are stored in the buffer device 20 and/or in the configuration register 80.

Figure 2 shows another embodiment of a semiconductor circuit 101. Additionally to the elements and functions described for the semiconductor circuit 100 in figure 1 the semiconductor circuit 101 comprises a voltage regulator 70 which is coupled to a supply input 3 and comprises a first output for providing an internal supply voltage and a second output for providing an external supply voltage. The first output is coupled to an internal supply line 75 to which the sensor interface 10, the buffer device 20, the protocol device 40 and the transceiver device 50 are electrically connected. The second output of the voltage regulator 70 is coupled to a supply output 4. A control input of the voltage regulator 70 is coupled to the control device 60 via the control line 65.

The semiconductor circuit 101 further comprises a configuration register 80 which is coupled to the control device 60. A clock unit 35 is coupled to the bus interface connector 2 for receiving a clock signal or synchronization signal. As an alternative or additionally the clock unit 35 can be coupled to a synchronization input 5 for the same purpose. An output of the clock unit 35 is coupled to the bus signal converter 30 for providing clock and synchronization information.

A signal processing unit 61 is comprised by the semiconductor circuit 101 which is coupled to the buffer device 20 such that it can access the data register 25 within the buffer device 20. The signal processing unit 61 is also coupled to the control line 65 for receiving control commands from the control device 60. A diagnosis device 90 is coupled to the sensor connector 1 and to the bus interface connector 2 for analyzing respective signals at the connectors 1, 2. The diagnosis device 90 is further coupled to the buffer device 20 for retrieving and/or storing respective status information or status words in the buffer device 20.

The voltage regulator 70 can be a DC-DC converter which converts an input voltage at the supply input 3 to an internal supply voltage for the elements of the semiconductor circuit 101. Usually the input voltage at the supply input 3 is of a higher voltage level than a voltage level of the internal supply voltage. In the case that a sensor device coupled to the sensor connector 1 needs a power supply, the voltage regulator 70 can derive a external supply voltage for the sensor device which is provided at the supply output 4. The voltage regulator 70 can comprise a buck mode DC-DC converter or a linear regulator.

A synchronization and/or a correct timing of a bus signal, either when generating the bus signal or when analyzing the bus signal, can be done by the bus signal converter 30 depending on a clock signal or synchronization signal provided from the clock unit 35. In one embodiment the clock unit 35 analyses the signals at the bus interface connector 2 and derives an internal clock signal or synchronization signal from an information at the connector 2. For example a synchronization preamble of a data telegram at the bus interface connector 2 can be evaluated by the clock unit 35, wherein the preamble comprises a synchronization information like a clock period and time instance of clock edges. This information can be used to derive a control word from a bus signal received by the protocol device 40. Accordingly, this information can also be used for generating a data telegram for sending data stored in the buffer device 20. The clock unit 35 can also decode addresses and/or identifiers from signals received via the bus interface connector 2 and generate respective control signals for further processing.

In another embodiment an external clock signal can be provided at the synchronization input 5 which is used for generating and analyzing bus signals. For example, a clock signal according to the LIN-Standard can be provided by an external clock generator, which generates the clock signal with a tolerance of ±1,5% with respect to a given reference frequency or data rate.

The signal processing unit 61 is configured to process data words stored in the buffer device 20, in other words to execute an algorithm on sensor data stored in the buffer device 20. For example this algorithm can comprise a filtering, preferably a low-path filtering of stored data words. The algorithm can be realized with a fixed programming which for example results in a fixed filter function. Through the processing of the stored data words by the signal processing unit 61 preprocessed data can be sent over the bus interface connector 2 such that a processing of the transmitted data is reduced in a control system connected to the bus interface connector 2. A function of the signal processing unit 61 can be controlled by the control device 60 for example, a function of the signal processing unit 61 can be activated or de-activated depending on a given mode of operation. The algorithm of the signal processing unit 61 can be applied to the data words stored in the data register 25 or, as an alternative, directly on the data words provided by the sensor interface 10 before storing them in the buffer device 20.

The diagnosis device 90 can for example be configured to detect whether a sensor device coupled to the sensor connector 1 provides a faulty sensor signal which preferably should not be transmitted over the bus interface connector 2. To this end the diagnosis device 90 can set or store status flags in the buffer device 20 or the configuration register 80 which for example can be evaluated by the control device 60 such that a generation of respective bus signals in the bus signal converter 30 is deactivated. The diagnosis device 90 can also be configured to detect a signal status at the bus interface connector 2. For example an over voltage or an under voltage at the connector can be detected. It can also be analyzed by the diagnosis device 90 whether a bus signal generated by the bus signal converter 30 is in accordance with the respective bus standard. For example in case of a faulty generation of bus signals due to a hardware defect, a function of the semiconductor circuit can be deactivated or the semiconductor circuit 101 is decoupled from the bus system. Hence a blocking of the bus system can be prevented.

The configuration register 80 can store configuration data to be used by the control device 60. Such configuration information can also be forwarded to other elements of the semiconductor circuit, for example via the control line 65. In one embodiment the configuration register 80 stores a hardware address of the semiconductor circuit which is used for addressing it within the bus system it is connected to. Also other information for example about the used bus standard can be stored in the configuration register 80.

The semiconductor circuit 101 can have a power saving mode of operation or sleep mode which is applied in case a sensor signal is not needed within the control system at bus interface connector 2. In this case it is possible that the transceiver device 50 is configured to analyze the bus system and to detect an activation signal or wakeup signal at the bus interface connector 2. If such a wakeup signal is detected, semiconductor circuit 101 can be set to a normal mode of operation controlled by the transceiver device 50.

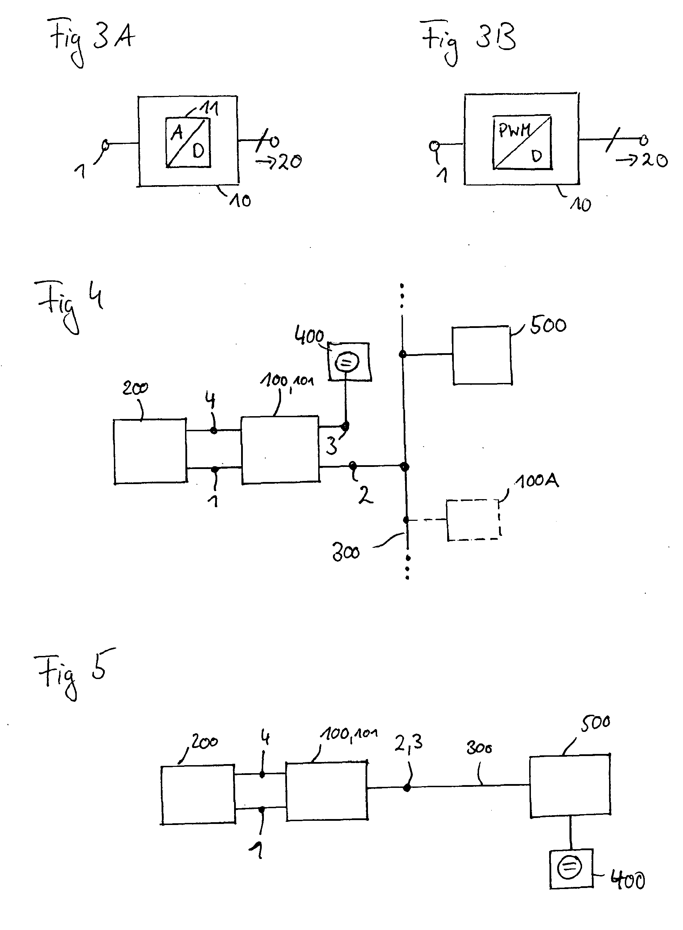

Figures 3A and 3B show exemplary embodiments of sensor interfaces 10. In figure 3A the sensor interface 10 comprises an analog to digital converter 11 which converts an analog sensor signal at the sensor connector 1 to a digital data word which is forwarded to the buffer device 20 for storing the data word.

In figure 3B the sensor interface comprises a PWM to digital converter which derives a digital data word from a pulse width modulation coded signal at the sensor connector 1. For example it comprises a counter which counts a number of cycles between a rising edge of the PWM coded signal to a respective falling edge. If a base frequency of the PWM coded signal and a respective signal period are known, the respective digital data word can be derived.

Figure 4 shows an exemplary embodiment of a sensor system comprising a semiconductor circuit 100, 101 according to one of the embodiments described above and a sensor device 200. The semiconductor circuit 100, 101 and the sensor device 200 are coupled via the sensor connector 1 and the supply output 4 such that as well sensor data as a supply voltage can be provided. The sensor system is further coupled to an external power supply 400 and to a bus system 300. Furthermore a master unit 500 and a further semiconductor circuit 100a are coupled to the bus system 300. The further semiconductor circuit 100a can have the same structure as one of the semiconductor circuits 100, 101. The sensor system coupled to the bus system 300 and the master unit 500 form a control system.

For example the master unit 500 evaluates the digital sensor data provided from the sensor system over the bus system 300. The master unit 500 can also send control commands over the bus system 300 which are evaluated by the semiconductor circuit 100, 101 and 100a.

In further embodiments it is also possible that more semiconductor circuits and/or more master units are coupled to the bus system 300. The bus system can for example be a LIN bus, a ISO K-line bus or another digital serial bus.

Figure 5 shows another embodiment of a sensor system comprising a semiconductor circuit 100, 101 and a sensor device 200. In this embodiment a power supply of the semiconductor circuit 100, 101 and the sensor system respectively is provided over a combined connector 2, 3 which both serves as a bus interface connector and a supply input. Furthermore in this embodiment the bus system 300 corresponds to a point-to-point connection between the sensor system and the master unit 500. A power supply device 400 is coupled to the master unit 500, wherein the bus system 300 both serves as a power supply line and a data transmission line.

To this end, the semiconductor circuit 100, 101 comprises a transceiver device 50 which is not shown here for reasons of a better overview which is configured to perform a current modulation of the supply line depending on the intermediate bus signal generated by the protocol device 40. The transceiver device 50 can also derive a second intermediate bus signal from the current modulated power supply signal, wherein in this case the current modulation is performed by the master unit 500. A bus standard used for this kind of communication is for example the PSI5 standard.

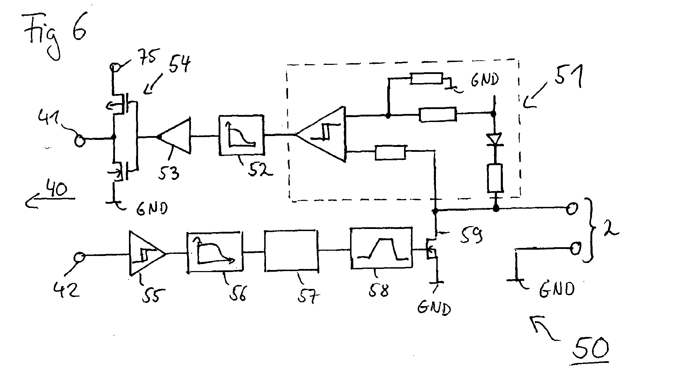

Figure 6 shows an exemplary embodiment of a transceiver device 50 which is adapted to send and receive data frames according to the LIN protocol standard. It comprises a receive path output 41 and a transmit path input 42 which are coupled to the protocol device 40. The bus interface connector 2 comprises a first tap for sending and receiving a serial bus signal and a second tap for having a common reference potential GND.

The receive path comprises a comparator unit 51, a first filter element 52, a signal buffer 53 and an inverter 54 whose output is coupled to the receive path output 41. The comparator unit 51 which on its input side is coupled to the bus interface connector 2 comprises a comparator, a receiving diode and several impedance elements or resistors. The impedance elements or resistors are used for coupling the comparator to the bus interface connector 2.

An output signal of the comparator unit 51 is filtered by the first filter element 52 and stabilized or amplified by the signal buffer 53. Through the inverter 54 a digital, binary signal, for example the second intermediate bus signal is achieved which is provided to the protocol device 40 via the receive path output 41.

The transmit path comprises a comparator 55, a second filter element 56, a transmit driver control unit 57, a pulse shaper 58 and an output transistor 59. An input of the comparator 55 is coupled to the protocol device 40 via the transmit path input 42. A control input of the output transistor 59 is coupled to the pulse shaper 58 and an output of the output transistor 59 is coupled to the bus interface connector 2.

In this embodiment a binary signal, for example the first intermediate bus signal received from the protocol device 40 is processed by the comparator 55 to achieve a predefined signal level. The processed signal is filtered by the second filter element 56 and further processed by the transmit driver control unit 57. For example in the transmit driver control unit 57 the signal is process depending on configuration data stored in the configuration register 80. An output signal of the transmit driver control unit 57 is pulse shaped by the pulse shaper 58 and used to control the output transistor 59 which controls a signal level at the bus interface connector 2.

Although this embodiment of a transceiver device 50 is described for the LIN protocol standard, it can also be used for other serial protocol standards, whereby simple modifications may be necessary.

Reference list
- 1: sensor connector
- 2: bus interface connector
- 3: supply input
- 4: supply output
- 5: synchronization input
- 10: sensor interface
- 20: buffer device
- 25: data register
- 30: bus signal converter
- 35: clock unit
- 40: protocol device
- 50: transceiver device
- 60: control device
- 61: signal processing unit
- 65: control line
- 70: voltage regulator
- 75: supply line
- 80: configuration register
- 90: diagnosis device
- 100, 100A, 101: semiconductor circuit
- 200: sensor device
- 300: bus system
- 500: master unit
- 400: power supply

## Claims

1. A semiconductor circuit (100, 101), comprising
- a sensor connector (1);
- a bus interface connector (2);
- a sensor interface (10) which is configured to convert an input signal at the sensor connector (1) into at least one data word;
- a buffer device (20) which is configured to store the at least one data word; and
- a bus signal converter (30) which is configured to provide a bus signal according to a bus standard of the bus interface connector (2) as a function of the at least one stored data word.

2. The semiconductor circuit (100, 101) according to claim 1, further comprising a voltage regulator (70) which is coupled to a supply input (3) and is configured to derive an internal supply voltage for at least one of the sensor interface (10), the buffer device (20) and the bus signal converter (30) as a function of an input voltage at the supply input (3).

3. The semiconductor circuit (100, 101) according to claim 2,
wherein the voltage regulator (70) is further configured to derive an external supply voltage to be provided at a supply output (4) as a function of the input voltage.

4. The semiconductor circuit (100, 101) according to claim 2 or 3,
wherein the voltage regulator (70) comprises a buck converter and/or a linear regulator.

5. The semiconductor circuit (100, 101) according to one of claims 1 to 4, further comprising a control device (60) which is configured to coordinate a respective data processing function of the sensor interface (10), the buffer device (20) and the bus signal converter (30).

6. The semiconductor circuit (100, 101) according to claim 5,
wherein the control device (60) comprises a microcontroller or a control state machine which are configurable with a fixed programming respectively.

7. The semiconductor circuit (100, 101) according to claim 5 or 6, further comprising a configuration register (80) which is configured to store configuration data to be used by the control device (60).

8. The semiconductor circuit (100, 101) according to one of claims 1 to 7, further comprising a diagnosis device (90) which is configured to perform at the sensor connector (1) and/or at the bus interface connector (2) a status detection and/or a failure detection.

9. The semiconductor circuit (100, 101) according to one of claims 1 to 8,
wherein the bus signal converter (30) comprises
- a protocol device (40) which is configured to generate a first intermediate bus signal according to the bus standard as a function of the at least one stored data word; and
- a transceiver device (50) which is configured to derive the bus signal from the first intermediate bus signal and to transmit the bus signal over the bus interface connector (2).

10. The semiconductor circuit (100, 101) according to claim 9,
wherein the protocol device (40) is configured to perform a synchronization of the first intermediate bus signal depending on a synchronization signal to be provided at a synchronization input (5) or at the bus interface connector (2).

11. The semiconductor circuit (100, 101) according to claim 9 or 10,
wherein the transceiver device (50) is configured to derive a second intermediate bus signal from a signal received at the bus interface connector (2), wherein the protocol device (40) is configured to derive at least one control word from the second intermediate bus signal and wherein the buffer device (20) is configured to store the at least one control word.

12. The semiconductor circuit (100, 101) according to claim 11,
wherein the sensor interface (10) is configured to derive a control signal from the at least one stored control word and to provide the control signal to the sensor connector (1).

13. The semiconductor circuit (100, 101) according to one of claims 1 to 12, further comprising a signal processing unit (61) which is configured to process data words stored in the buffer device (20) or to filter the stored data words.

14. A sensor system comprising a semiconductor circuit (100, 101) according to one of claims 1 to 13 and a sensor device (200) which is coupled to the sensor connector (1).
